# EUROPEAN PATENT SPECIFICATION

(11) **EP 3 332 538 B1**
(45) Date of publication and mention of the grant of the patent: **03.07.2019**
(21) Application number: 16751433.0
(22) Date of filing: 03.08.2016
(51) Int. Cl.: H04L 29/08

(54) **SERVICE ELEMENTS**
DIENSTELEMENTE
ÉLÉMENTS DE SERVICE

(30) Priority: 03.08.2015 US 201562200316 P
(43) Date of publication of application: 13.06.2018
(73) Proprietor: Convida Wireless, LLC, Wilmington, DE 19809-3727 (US)
(72) Inventor: DONG, Lijun, San Diego, CA 92130 (US); WANG, Chonggang, Princeton, NJ 08540 (US); LU, Guang, Thornhill, Ontario L4J 9B6 (CA); LI, Xu, Plainsboro, NJ 08536 (US)
(74) Representative: D Young & Co LLP
(86) International application number: PCT/US2016/045260
(87) International publication number: WO 2017/023979

(56) References cited:
- US-A1- 2013 226 998
- US-A1- 2015 006 719
- US-A1- 2015 063 208

## Description

### BACKGROUND

### IoT Service

The Internet of Things (IoT) is a world where billions of devices can sense, communicate and share information, all interconnected over public or private networks. These interconnected devices have data regularly collected, analyzed and used to initiate action, providing a wealth of services.

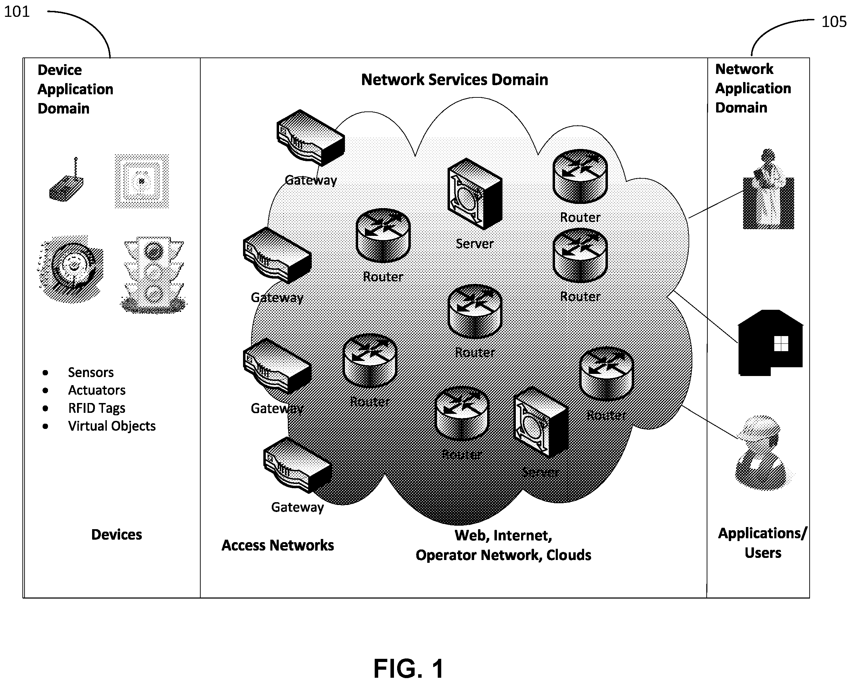

FIG. 1 illustrates a deployment of devices, gateways, routers and servers, as well as applications and users in an IoT system. Herein, the terms user, client, and application are used interchangeably, and refer to the entity that requests services. Clients can be in the format of applications (e.g., AE). You can install an application on your phone then access the service. The devices in device application domain 101 sense and collect data, which may be stored in devices themselves or in connected gateways in the access networks, as well as servers in the Internet, operator network, or clouds to provide services to applications or users in the network application domain 105.

### oneM2M Service Layer

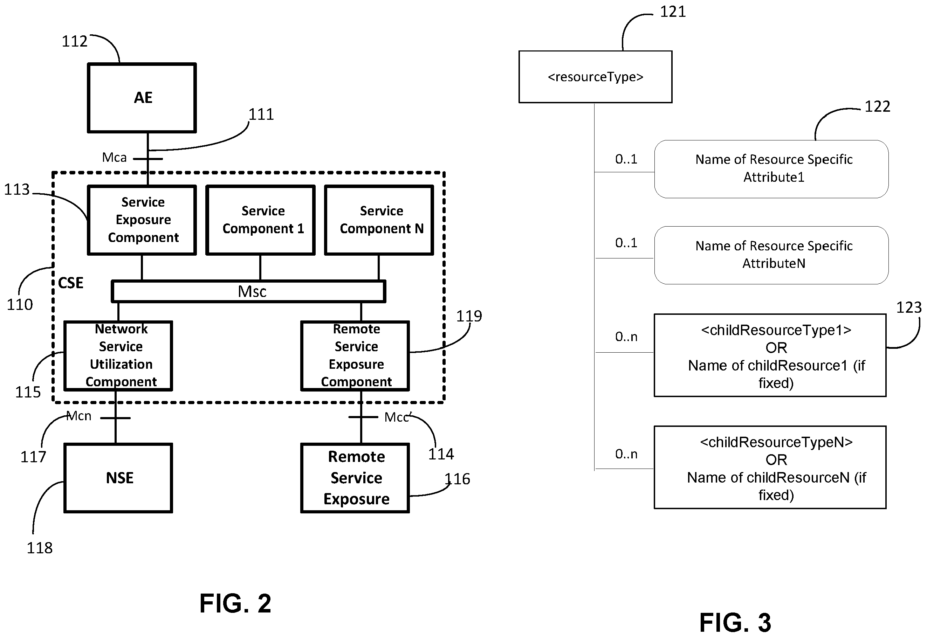

The oneM2M standard under development (oneM2M-TS-0001 oneM2M Functional Architecture-V-1.6.1) defines a service layer (SL) called "Common Service Entity (CSE)." The SL provides "horizontal" services that can be utilized by different "vertical" machine-to-machine (M2M) systems and applications, such as e-Health, fleet management, and smart homes. As shown in FIG. 2, CSE 110 supports multiple reference points. Mca reference point 111 interfaces with the Application Entity (AE) 112. Mcc reference point (not shown) interfaces with another CSE within the same service provider domain and Mcc' reference point 114 interfaces with another CSE 116 in a different service provider domain. Mcn reference point 117 interfaces with the underlying network service entity (NSE) 118. NSE 118 provides underlying network services to the CSEs, such as device management, location services, and device triggering.

oneM2M architecture enables the application service node (ASN), application dedicated node (ADN), the middle node (MN), and the infrastructure node (IN). The ASN is a node that contains one CSE and contains at least one AE. An example of physical mapping is an ASN residing in an M2M Device. The ADN is a node that contains at least one AE and does not contain a CSE. An example of a physical mapping is an ADN residing in a constrained M2M Device. An MN is a node that contains one CSE and contains zero or more AEs. An example of a physical mapping for an MN is an MN residing in an M2M Gateway. The IN is a node that contains one CSE and contains zero or more AEs. An example of a physical mapping for an IN is the IN residing in an M2M Service Infrastructure. There also may be a non-oneM2M node, which is a node that does not contain oneM2M Entities (neither AEs nor CSEs). Such nodes represent devices attached to the oneM2M system for interworking purposes, including management.

Prior art patent documents US2015/0006719 and US2015/0063208 from the same applicant disclose registering, at a producer IoT device, a set of services configured for execution on the IoT device with a producer management application on the producer IoT device and broadcasting or multicasting a system service advertisement to notify other IoT devices.

### Resource Structure in oneM2M

Entities in the oneM2M system (oneM2M-TS-0001 oneM2M Functional Architecture-V-1.6.1), such as AEs, CSEs, data, etc. are represented as resources. A resource structure is specified as a representation of such resources. Such resources are uniquely addressable.

Resources are specified via a tabular notation as shown in FIG. 3 and as described in more detail below. The resources (e.g., resource 121) are specified in association with CSE 110. The resources are the representation in CSE 110 of the components and elements within the oneM2M System. Other CSEs, AEs, application data representing sensors, commands, etc. are known to CSE 110 by way of their resource representation. Resource 121 may be described as a uniquely addressable entity in oneM2M architecture. Resource 121 may contain child resources (e.g., child resource 123) and attributes (e.g., attribute 122). Child resource 123 may be defined as a sub-resource of another resource (resource 121) that is its parent resource. The parent resource (resource 121) contains references to the child resources. Attribute 122 stores information pertaining to the resource itself.

Graphical representations are used for representing the attributes and child resources. Square boxes are used for resources (e.g., resource 121 and child resource 123) and square boxes with round corners are used for attributes (e.g., attribute 122). Attributes in a <*resourceType*> may be as shown in FIG. 3. The attributes table for announce-able <*resourceType*> resource includes an additional column titled 'Attributes for <*resourceTypeAnnc*>', indicating the attributes that are to be announced for that <*resourceType*>.

**Table 1: Attributes of <resourceType> resource**

| **Attributes of <*resourceType*>** | **Multipli city** | **RW/RO/WO** | **Description** | ***<resourceTypeAnnc*> (MA/OA/NA)** |
|---|---|---|---|---|
| <Fill in name of Common Attribute1> | <Fill in Multiplicity> | <Fill in RW or RO or WO> | Provide description of this attribute - to be moved later to a common attribute clause. | <Fill in MA or OA or NA> |
| <Fill in name of Common AttributeN> | <Fill in Multiplicity> | <Fill in RW or RO or WO> | Provide description of this attribute - to be moved later to a common attribute clause. | <Fill in MA or OA or NA> |
| <Fill in name of Resource Specific Attribute1> | <Fill in Multiplicity> | <Fill in RW or RO or WO> | Provide description of this attribute - to be moved later to a central attribute table that also defines the type of the attribute, allowed ranges etc. | <Fill in MA or OA or NA> |
| <Fill in name of Resource-Specific AttributeN> | <Fill in Multiplicity> | <Fill in RW or RO or WO> | Provide description of this attribute - to be moved later to a central attribute table that also defines the type of the attribute, allowed ranges etc. | <Fill in MA or OA or NA> |

The access modes for *attributes* can assume values such as read/write (RW), read only (RO), and write once (WO). With regards to RW, the value of the attribute is set when the resource is Created or Updated based on information from the Originator (i.e., ***Content*** parameter). Such attributes are allowed for Create/Update/Retrieve/ Delete/Notify operations. For RO, the value of the attribute is set by the Hosting CSE internally. Such an attribute is allowed for retrieve operation only. And with WO, the value of the attribute is set when the resource is Created based on information from the Originator (i.e., ***Content*** parameter). Such an attribute is allowed for Retrieve operation after the creation.

The multiplicity, both for child resources and the attributes can have values with different associated meanings. A value of "0" indicates that the child resource/attribute is not present. A value of "1" indicates that the child resource/attribute is present. A value of "0..1" indicates that the child resource/attribute could not be present. If present, it can have an instance of one only. A value of "0..n" indicates that the child resource could not be present. If present, multiple instances are supported. A value of "1..n" indicates that the child resource is always present. It has at least one instance and can have multiple instances. An attribute multiplicity post-fixed with (**L**) indicates that it is a list of values.

The attributes for <*resourceTypeAnnc*> in the attribute table can have the following set of values:
- **MA** (Mandatory Announced): The attribute in the original resource is announced to the announced resource. The content of such an announced attributes is the same as the content of the original attribute.
- **OA** (Optional Announced): The attribute in the original resource may be announced to the announced resource depending on the contents of the *announcedAttribute* attribute at the original resource. The content of such an announced attribute is the same as the content of the original attribute.
- **NA** (Not Announced): The original attribute is not announced to the announced resource.

### oneM2M Service Architecture

The M2M Service Architecture described in oneM2M Service Component Architecture, TS-0007 Service Component Architecture-V-0.7.0 (which is incorporated by reference in its entirety) augments the oneM2M Functional Architecture by specifying M2M Services provided to M2M Application and M2M Service Providers. As shown in FIG. 2, there may be multiple components, such as service exposure component 113, network service utilization component 115, and remote service exposure component 119. The service exposure component 113 exposes services to AEs. The network service utilization component 115 consumes services from NSE 118. Remote service exposure 116 connects services from different M2M environments.

### SUMMARY

Disclosed herein are service, service element concepts to the service layer, such that a service/service element can be managed as a resource at the service layer.

An IoT service may have multiple service elements. Each service element may be provided by multiple devices or virtual devices (service element hosts). Currently the Service Layer lacks functionality to support a Service composed of multiple Service Elements.

Disclosed are ways to process the service, service element and host report/update from each service host. The service layer will have the capability to build and maintain the service, service element, and service element host record for each available service. Disclosed herein are the use of resources in order to support service with multiple service elements in oneM2M, as an example.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not constrained to limitations that solve any or all disadvantages noted in any part of this disclosure.

### BRIEF DESCRIPTION OF THE DRAWINGS

A more detailed understanding may be had from the following description, given by way of example in conjunction with the accompanying drawings wherein:
FIG. 1 illustrates an exemplary deployment of devices, gateways, routers and servers, as well as applications and users in an IoT system;
FIG. 2 illustrates an exemplary oneM2M services architecture;
FIG. 3 illustrates an exemplary <resourceType> representation convention;
FIG. 4 illustrates an exemplary use case for a weather deducing service that includes the use of service elements;
FIG. 5 illustrates an exemplary message flow associated with a service, service element and host report (hereinafter S-SEaH report);
FIG. 6 illustrates an exemplary message flow associated with a S-SEaH update message;
FIG. 7 illustrates an exemplary message flow of service deletion;
FIG. 8 illustrates an exemplary resource structure of <service>;
FIG. 9 illustrates an exemplary resource structure of <serviceElement>;
FIG. 10 illustrates an exemplary S-SEaH report in oneM2M resource oriented architecture (ROA);
FIG. 11 illustrates an exemplary message flow creation of service and service element resources;
FIG. 12 illustrates an exemplary oneM2M message routing service component;
FIG. 13 illustrates an exemplary display that may be generated based on the methods and systems discussed herein;
FIG. 14A is a system diagram of an example machine-to-machine (M2M) or Internet of Things (IoT) communication system in which the disclosed subject matter may be implemented;
FIG. 14B is a system diagram of an example architecture that may be used within the M2M / IoT communications system illustrated in FIG. 14A;
FIG. 14C is a system diagram of an example M2M / IoT terminal or gateway device that may be used within the communications system illustrated in FIG. 14A; and
FIG. 14D is a block diagram of an example computing system in which aspects of the communication system of FIG. 14A may be embodied.

### DETAILED DESCRIPTION OF ILLUSTRATIVE EXAMPLES

Disclosed herein is the use of one or more service elements to provide a service, which may be used for the Internet of Things (IoT). Each service element may be provided by multiple devices or virtual devices (service element hosts). Discussed in more detail herein are concepts associated with the service layer, such as a service, service host, service element, and service element host. A service may be considered a set of actions, functions, or data that are of interest to clients and put in place to provide a set of outcomes and deliverables based on clients' input. A service host is the entity that may announce a service and provide interfaces for clients to access the service. The service host may form the whole service from the service elements and deliver it to the origin of a service request. A service element may be considered an individual component that a service is made up of. A service element is usually data (e.g., data sensed from the physical world) used to provide the service. For example a service element may be temperature or blood sugar data. A service element may correspond with a primary function of particular device (e.g., temperature from a thermometer) or may be generated by a device with a plurality of functions (e.g., mobile device). A mobile device may sense light, motion, orientation, or touch, among other things, with one or combination of sensors. Lastly, a service element host may be defined as the physical host of a service element. There may be multiple and different service elements (e.g., temperature or humidity) located on one service element host. For example, a weather service includes temperature as one of its service elements; as such, a temperature sensor node would be a service element host.

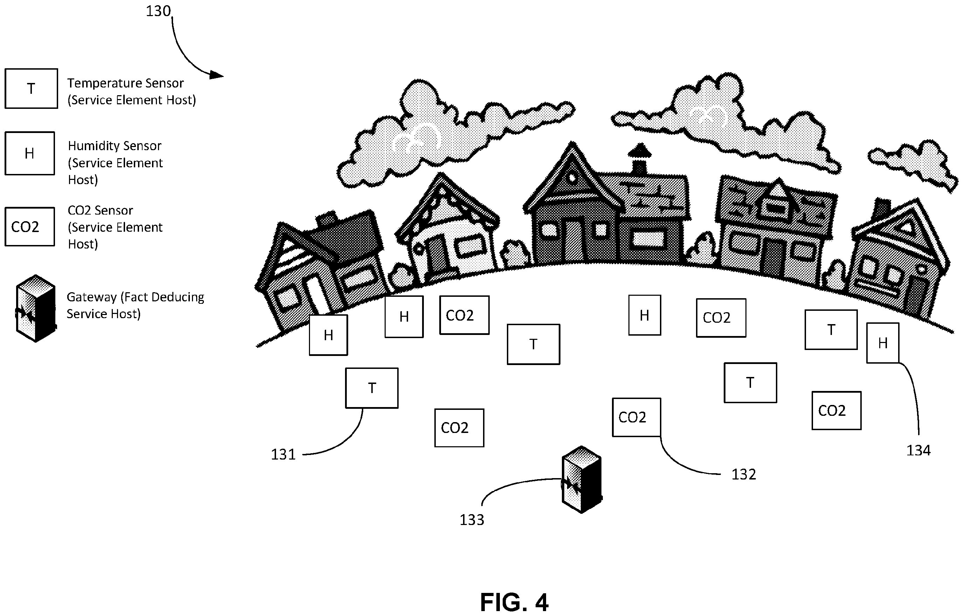

FIG. 4 illustrates a use case for a weather deducing service that includes the use of service elements. In FIG. 4, neighborhood 130 includes service elements (e.g., temperature, humidity, and CO2) and corresponding service element hosts, such as temperature sensor 131, humidity sensor 132, and CO2 sensor 134. Weather deducing service host 133 can generate deductions based on the collected data from various devices (e.g., those service element hosts) and provide the service to others.

For example, with reference to FIG. 4, a deduction could be whether it is a pleasant day in neighborhood 130, which may be based on the temperature, humidity, and CO2 (e.g., air pollution) data collected by various sensor devices deployed in neighborhood 130. As shown in FIG. 4, the various sensor devices are deployed in neighborhood 130 for sensing each of the parameters, e.g. temperature, humidity, and CO2. This particular weather deducing service has a gateway 133 that is the service host. The weather deducing service has three types of service elements, each of which has multiple hosts (e.g., various sensors).

Conventionally, there is lack of functionality to support a service (as defined herein) composed of multiple service elements. The conventional service layer (e.g., oneM2M service layer) does not have this concept of a service, and it does not support the scenarios that a service may be composed of multiple service elements. The conventional service layer has many resources defined, but these only store data that are collected from the physical world. A client would be able to retrieve that data and process it locally. In addition, the conventional service layer does not provide the methods to process and maintain the information of a service, which can be composed of multiple service elements. Without such methods, a service cannot be discovered or used at the service layer.

A service, as discussed herein, determines information based on data gathered by service elements (it does NOT just store the data, as is done with conventional service layers). Service disclosed herein may use data provided by sensing the physical world. This new service can be provided by the service layer, which enables the service to be discovered and used by a client. The service disclosed herein, for example with reference to FIG. 4, may deduce whether it is pleasant weather or whether it is pleasant weather in relation to neighborhood 130. Another example is associated with blood pressure data. A service may be provided that determines if a person is in good health or if any medication is needed.

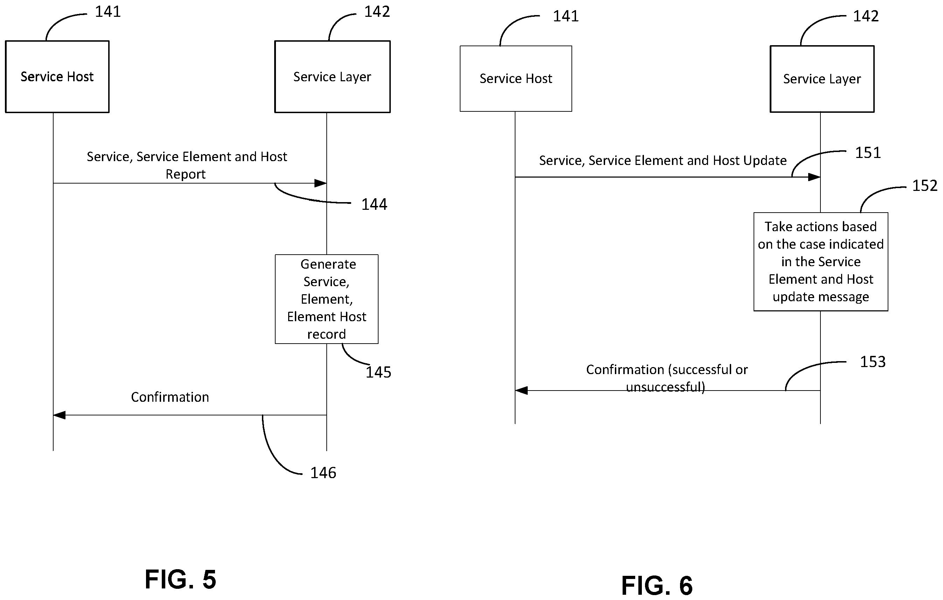

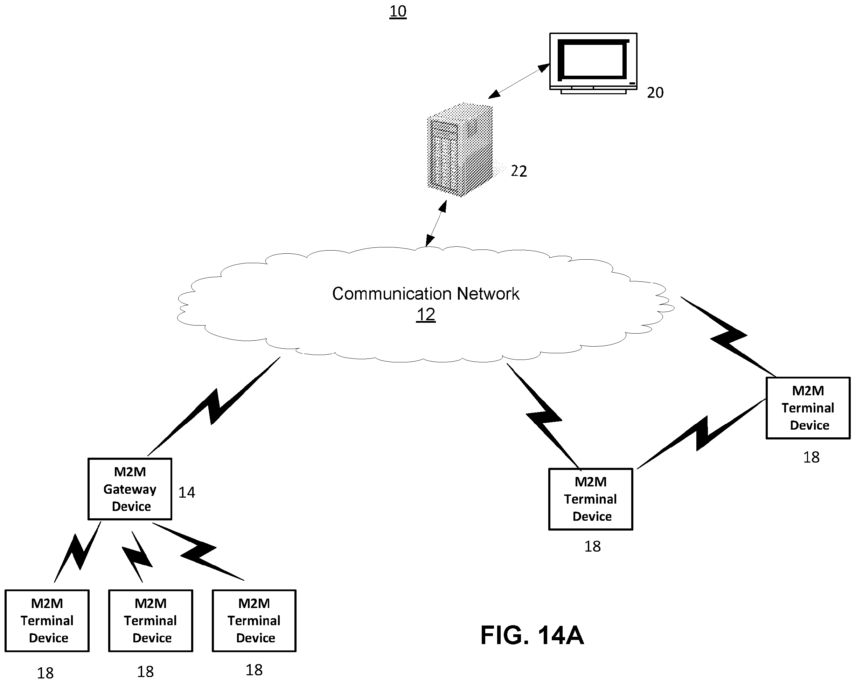

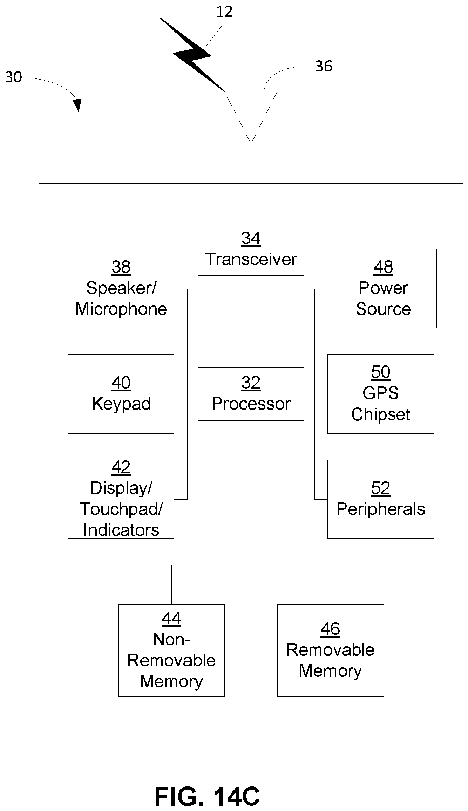

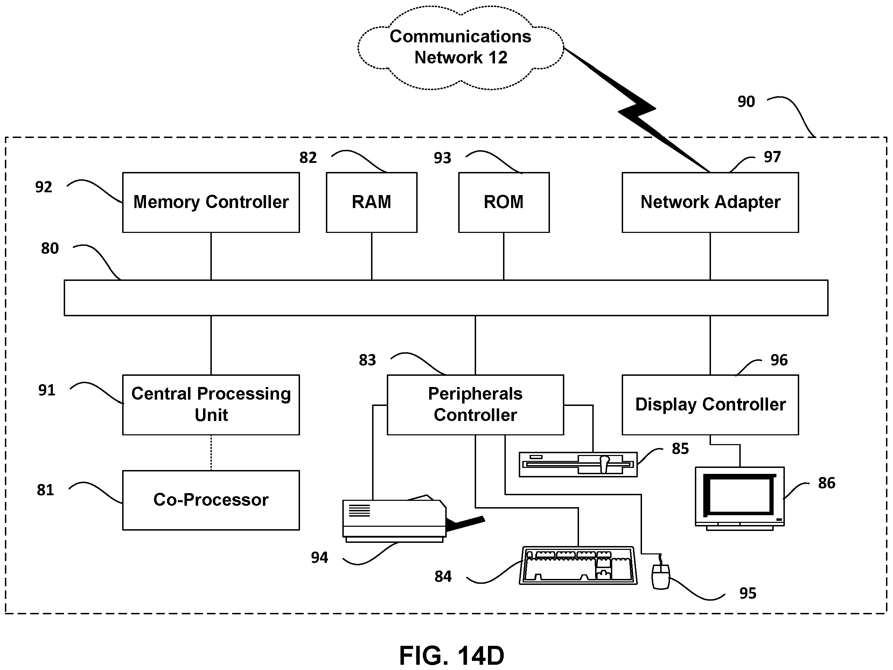

Disclosed below are ways for a service layer to provide the capabilities to support a service with multiple service elements, in addition to oneM2M examples implemented using oneM2M for the proposed concepts. It is understood that the entities performing the steps illustrated in FIG. 5 - FIG. 7, and FIG. 10 - FIG. 11 are logical entities that may be implemented in the form of software (e.g., computer-executable instructions) stored in a memory of, and executing on a processor of, a device, server, or computer system such as those illustrated in FIG. 14C or FIG. 14D. That is, the method(s) illustrated in FIG. 5 - FIG. 7, and FIG. 10 - FIG. 11 may be implemented in the form of software (e.g., computer-executable instructions) stored in a memory of a computing device, such as the device or computer system illustrated in FIG. 14C or FIG. 14D, which computer executable instructions, when executed by a processor of the computing device, perform the steps illustrated in FIG. 5 - FIG. 7, and FIG. 10 - FIG. 11. In an example, with further detail below with regard to the interaction of M2M devices, service host 141 of FIG. 5 may reside on M2M gateway device 14 of FIG. 14A, while service layer 142 of FIG. 5 may reside on M2M device 14, 18, or 22 of FIG. 14A..

FIG. 5 illustrates an exemplary message flow associated with a service, service element and host report (hereinafter S-SEaH report). Service layer 142 takes input of such S-SEaH report to build service, service element, and service element host record for each service. As discussed herein a service is composed of one or more service element(s). Each service and each service element may be assigned a servicelD or an elementID, respectively.

With reference to FIG. 5, at step 144 service layer 142 receives a S-SEaH report message, which may be from service host 141. Table 1 provides an example of what may be contained in a S-SEaH report message, particularly when a new service is available.

**Table 1: Service, Service Element and Host Report Message**

| | | | | | |
|---|---|---|---|---|---|
| serviceID | numOfElement | elementID | numOfElementHost | listOfElementHost | serviceElementOrder |

The S-SEaH report message may include a serviceID, numOfElement, elementID, numOfElementHost, listOFElementHost, and serviceElementOrder, among other things. A serviceID is the identifier that can represent and differentiate a service. A serviceID may be assigned by a central point such as the service directory such that each service has a unique identifier. As an example, the servicelD may include the description of the service as well as some labels that differentiate it from others, or it could be a URI, etc. numOfElement indicates the number of the service elements that the service is composed of. Following the numOfElement field may be the service element with its identifier, number of element host, and corresponding host identifiers, as shown. The numOfElement field may be obtained from the number of elementIDs contained in the S-SEaH report message of step 144.

elementID is the identifier that can represent and differentiate the service element within this service. The elementID may be extended from the servicelD. With reference to Table 2, a service has a servicelD of DeduceService1, which has 3 service elements. The elementIDs are extended from the serviceID, which are DeduceService1.temperature, DeduceService1.humidity, and DeduceService1.air. numOfElementHost indicates the number of element hosts for each service element. The numOfElementHost field may be deduced by considering the listOfElementHost field.

listOfElementHost contains a list or other indicator of service element hosts for each service element. After numOfElement, in one example, there may be multiple combinations of elementID, numOfElementHost, listOfElementHost that follow. The service element hosts are known and updated to the service host by the service element host registering to the service host or discovered by the service host. serviceElementOrder considers the factor (e.g., an indicator) of service elements' sequence in requesting a service. In other words, the service elements of a service may have pre-determined orders that should be received by clients in order to get the full service. If there is no such order requirement, then this field can be left out of the S-SEaH report message, or otherwise indicated within the S-SEaH report. Like other fields, serviceElementOrder may be retrieved or provided to clients.

Table 2 illustrates an exemplary S-SEaH record that may be derived from the message. It could also be an example of what could be displayed on a display interface (e.g., display/touchpad 42) for a S-SEaH record or report message. The serviceElementOrder is not shown in Table 2, because, in this instance, it is not needed. It should be understood that identifiers contained in this record of Table 2, and throughout, for a service, service element, and service element host are for illustration purposes, and may be in other possible forms, e.g. IP address, MSISDN, or IMSI.

With continued reference to FIG. 5, at step 145, service layer 142 generates the S-SEaH record, which may be similar to what is shown in Table 2. The S-SEaH record of Table 2 is based on S-SEaH report message, such as the message provided at step 144 from service host 141. Service layer 142 may appropriately share or publish the DeduceService1. So service layer 142 will have and may publish a service resource that has the attributes to maintain the information of Table 1. Service layer 142 may (in some instances) just send update information, which may add or subtract service elements, etc. At step 146, service layer 142 sends a message to service host 142. The message of step 146 may indicate that the record has been successfully created for the service (or unsuccessful for reasons such as incomplete or conflicting information).

For further clarification with regard to service layer 142 and service host 141, service host 141 mainly knows about the service (e.g., DeduceService1). So service host 141 which has a DeduceService1 may want to publish DeduceService1 to service layer 142. Because of the functionality provided by service layer 142, clients may discover DeduceService1 (and other services) of service host 141. Service layer 141 can manage the information of the service (e.g., DeduceService1) so that the services provided by service host 141 can be discovered and then used by a client.

**Table 2: Service, Service Element and Service Element Host Record**

| Service ID | Number of Service Elements | Service Element ID | Number of Service Element Hosts | Service Element Host (list of service elements) |
|---|---|---|---|---|
| DeduceService1 | 3 | DeduceService1.temperature | 3 | tempSensor1, tempSensor2, tempSensor3 |
| | | DeduceService1.humidity | 2 | humiditySensor1, humiditySensor2 |
| | | DeduceService1.air | 4 | airSensor1, airSensor2, airSensor3, airSensor4 |

Discussed below are scenarios with regard to the update of a service, service element, and service element host. A general message flow is provided in FIG. 6 and further details are provided herein with regard to different scenarios. At step 151, service layer 142 receives S-SEaH update message. At step 152, service layer 142 generates actions based on the case indicated in S-SEaH update message of step 151. At step 153, service layer 142 sends a message requesting more information, requesting corrected information, confirming success, notifying of failure, or the like.

The update message of step 151 may contain different types of updates that may happen to a service. Discussed below are several possible updates. For each case, the update message has the corresponding case number associated with it. For case 1, there is an update to a service ID (Case 1). A service's identifier may be modified after being registered to service layer 142. For example, the assigner of the serviceID may decide to change the serviceID because it detects the serviceID is not unique anymore or to update context information contained in the servicelD.

The steps in the message flow that are shown generally in FIG. 6 are discussed in more detail below with regard to Case 1 (update to a service ID). At step 151, service layer 142 receives the S-SEaH update message as shown in Table 3. Table 3 provides an example of the contents of the message of step 142, such as the case number, old serviceID, and the new servicelD. At step 152, service layer 142 finds that service record matches the old serviceID, and replaces it with the new servicelD. Service layer 142 may need to make sure that the new serviceID is unique among other existing service IDs. At step 153, service layer 142 may send a message with a successful or unsuccessful (e.g. no record found based on the old serviceID, or the new servicelD is not unique among other existing ones) confirmation, or the like.

**Table 3: Service Element and Host Update Message - Case 1**

| | | |
|---|---|---|
| Case 1 | Old serviceID | New serviceID |

With regard to case 2, there may be an update to a number of service elements (Case 2I, 2D). If the number of service elements is increased (Case 2I), the new service element and its service element hosts will be contained in the update message. For example, there may be a decision to deploy additional temperature sensors for the use case of FIG. 4. Then the service element host number is increased. If the number of the service elements is decreased (Case 2D), the identifier of the service element to be removed will be contained in the update message. For example, some of the temperature sensors may stop operating because the battery is depleted. Then the number of the service element host number is decreased.

The steps in the message flow that are shown generally in FIG. 6 are discussed in more detail below with regard to Case 2I (update to the number of service elements). At step 151, service layer 142 may receive the S-SEaH update message as shown in Table 4. Table 4 is an example table that contains the case number, serviceID to be updated, the new number of service elements, new elementID and its corresponding number of service element hosts, and the list of service element hosts. It should be understood that there may be more than one service element that is added based on the message of step 151. At step 152, service layer 142 finds the service record matching to the servicelD. Service layer 142 changes the numOfElement to the new one, and adds the new service element and the corresponding number of service element hosts, and the list of service element hosts to the record. At step 153, service layer 142 sends a message that may contain information associated with a successful or unsuccessful confirmation (e.g., no record found based on the serviceID or the new service element hosts cannot be reached, among other things).

**Table 4: Service Element and Host Update Message - Case 2I**

| | | | | | |
|---|---|---|---|---|---|
| Case 2I | serviceID | new numOfElement | elementID | numOfElementHost | listOfElementHost |

The steps in the message flow that are shown generally in FIG. 6 are discussed in more detail below with regard to Case 2D. At step 151, service layer 142 may receive the S-SEaH update message as shown in Table 5. Table 5 is an example table that contains the case number, serviceID to be updated, the new number of service elements, and the identifier of the existing service element to be removed. At step 152, service layer 142 determines that the service record matches the servicelD. Service layer 142 changes the numOfElement to the new one, and removes the deleted service element and the corresponding list of service element hosts from the record. At step 153, service layer 142 sends a message that may contain information associated with a successful or unsuccessful confirmation (e.g., no record found based on the serviceID, or the elementID to be removed is not found in the service).

**Table 5: Service Element and Host Update Message - Case 2D**

| | | | |
|---|---|---|---|
| Case 2D | serviceID | new numOfElement | elementID to be removed |

With regard to case 3, there may be an update to service element hosts of an existing service element (Case 3). The steps in the message flow that are shown generally in FIG. 6 are discussed in more detail below with regard to Case 3 (update to service element hosts of an existing service element). At step 151, service layer 142 may receive the S-SEaH update message as shown in Table 6. It should be understood that service host 141 may update the service element host for multiple services in one aggregated message in step 151. Table 6 is an example table that contains the case number, serviceID to be updated, the identifier of the existing service element to be updated, the new number of service element hosts, and the list of new service element hosts. At step 152, service layer 142 determines that the service record matches the servicelD. Service layer 142 updates the service element hosts indicated in the message. At step 153, service layer 142 sends a message that may contain information associated with a successful or unsuccessful confirmation (e.g., no record found based on the serviceID, or the elementID to be updated is not found in the service).

**Table 6: Service Element and Host Update Message - Case 3**

| | | | | |
|---|---|---|---|---|
| Case 3 | serviceID | elementID | new numOfElementHost | new listOfElementHost |

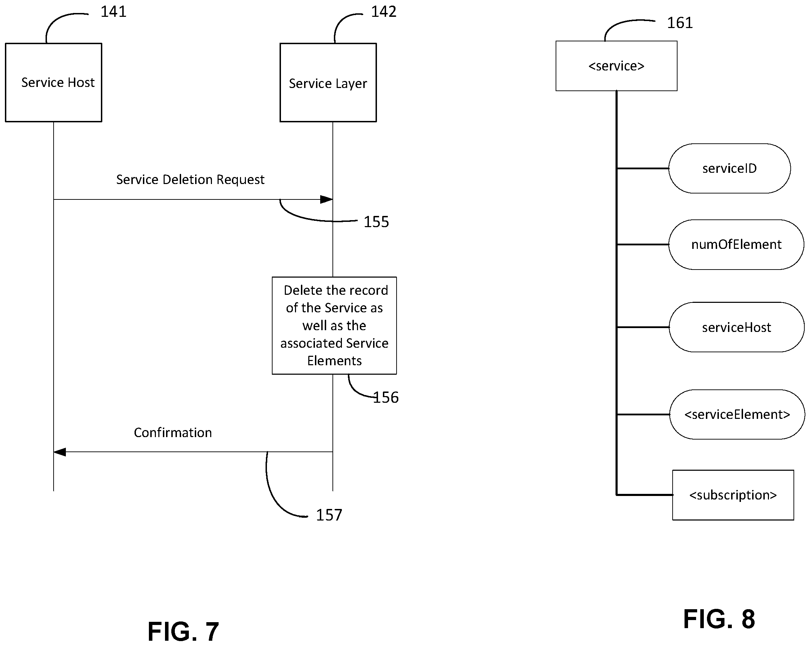

FIG. 7 illustrates an exemplary message flow for service deletion. At step 155, service layer 142 receives a S-SEaH deletion message for deleting S-SEaH information. The deletion message may include the servicelD. At step 156, service Layer 142 locates the record corresponding to the servicelD. When the record corresponding to the serviceID is found, the record of the service as well as the associated service element information is deleted. At step 157, service layer 142 sends a message that may contain information associated with a successful or unsuccessful confirmation.

Discussed below are more details of services and service elements with regard to a oneM2M scenario. FIG. 8 illustrates an exemplary resource tree structure of the service disclosed herein. A <service> resource (e.g., <service> 161) could be a child resource of <CSEBase> or <remoteCSE>, which stores the information of services on the local CSE and other remote CSEs, respectively. Table 7 and Table 8 show examples of the child resource and attributes of the <service> resource. Those common attributes can be found in oneM2M-TS-0001 oneM2M Functional Architecture-V-1.6.1.

**Table 7: Child Resources of <service> Resource**

| **Child Resource Type** | **Description** |
|---|---|
| <*serviceElement*> | The Service Element that composes the whole Service. |
| <*subscription*> | See clause 9.6.8 in oneM2M-TS-0001 oneM2M Functional Architecture-V-1.6.1. |

**Table 8: Attributes of <service> Resource**

| **Attribute** | **Name Description** | **<*serviceAnnc*> (MA/OA/NA)** |
|---|---|---|
| ***serviceID*** | The identifier that may represent and differentiate a Service. | **OA** |
| ***numOfElement*** | Indicates the number of the Service Elements that the Service is composed of. | **OA** |
| ***serviceHost*** | Indicates the identifier of Service Host of the Service. This identifier may be a URI, an IP address, or a FQDN. | **OA** |

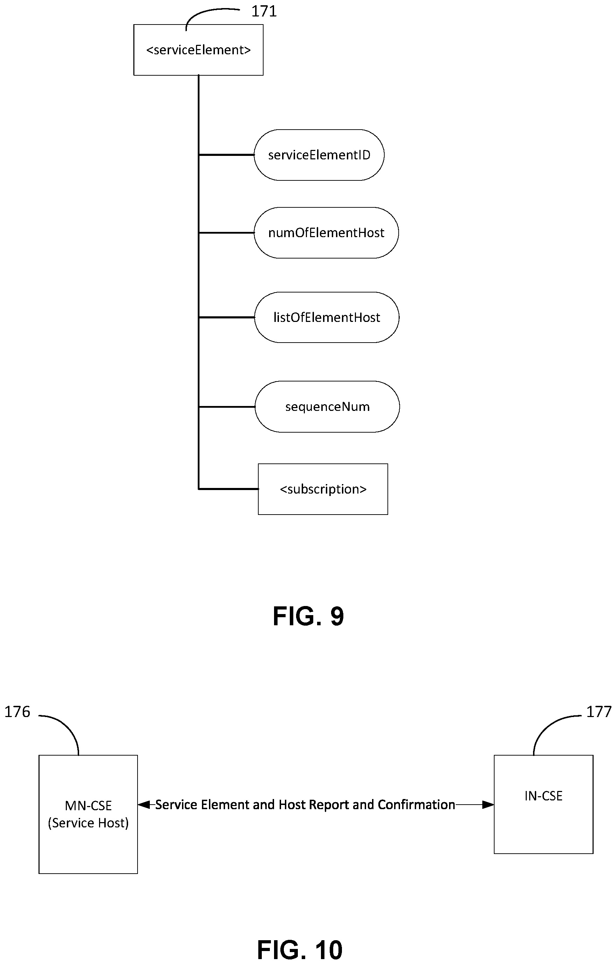

The resource tree structure of <serviceElement> is shown in FIG. 9. Table 9 and Table 10 show examples of the child resource and attributes of the <serviceElement> resource. Those common attributes can be found in oneM2M-TS-0001 oneM2M Functional Architecture-V-1.6.1.

**Table 9: Child Resources of <serviceElement> Resource**

| **Child Resource Type** | **Multiplici ty** | **Description** |
|---|---|---|
| <*subscription*> | 0..n | See clause 9.6.8 in oneM2M-TS-0001 oneM2M Functional Architecture-V-1.6.1 |

**Table 10: Attributes of <serviceElement> Resource**

| **Attribute Name** | **Multiplicity** | **RW/RO/WO** | **Description** | **<*serviceElementAnnc*>(MA/OA/NA)** |
|---|---|---|---|---|
| ***elementID*** | **1** | **RW** | The identifier that may represent and differentiate the Service Element within this Service. | **OA** |
| ***numOfElementHost*** | **1** | **RW** | Indicates the number of Element Hosts for this particular Service Element. | **OA** |
| ***listOfElementHost*** | **L** | **RW** | Contains the list of identifiers of Service Element Hosts for this particular Service Element. | **OA** |
| ***sequenceNum*** | **1** | **RW** | Indicates the sequence of this Service Element in the service retrieval. If the service retrieval does not require the sequence of its Service Elements, the attribute may be left empty. | **OA** |

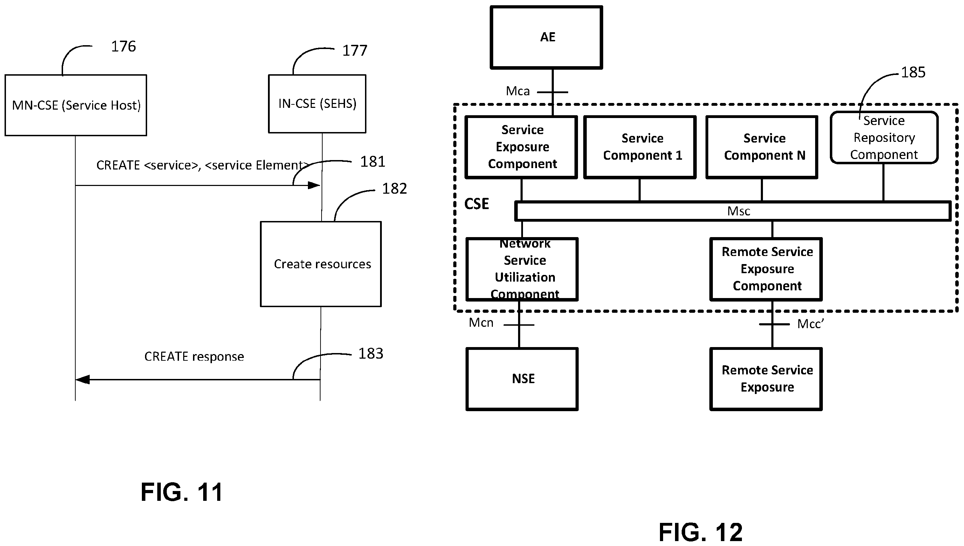

FIG. 10 illustrates an exemplary service element and host report that may be embodied in oneM2M RoA architecture. In this example, service host 141 is MN-CSE 176, which sends S-SEaH reports to service layer in IN-CSE 177. FIG. 11 illustrates an exemplary message flow of MN-CSE reporting its hosted service as well as associated service elements to IN-CSE. At step 181, IN-CSE 177 receives a CREATE <service>, <service element> message. The message of step 181 provides appropriate information of Table 1. At step 182, IN-CSE 177 generates resources based on the information from the message of step 181. At step 183, IN-CSE 177 may send a message that contains a CREATE response, which may be a confirmation or the like.

FIG. 12 illustrates an exemplary oneM2M service oriented architecture with a service repository component 185. Service repository component 185 maintains the local service components reported via Msc reference point and external service components that are reported to itself via Mcc' reference point. The maintenance includes create, update, delete, and retrieve.

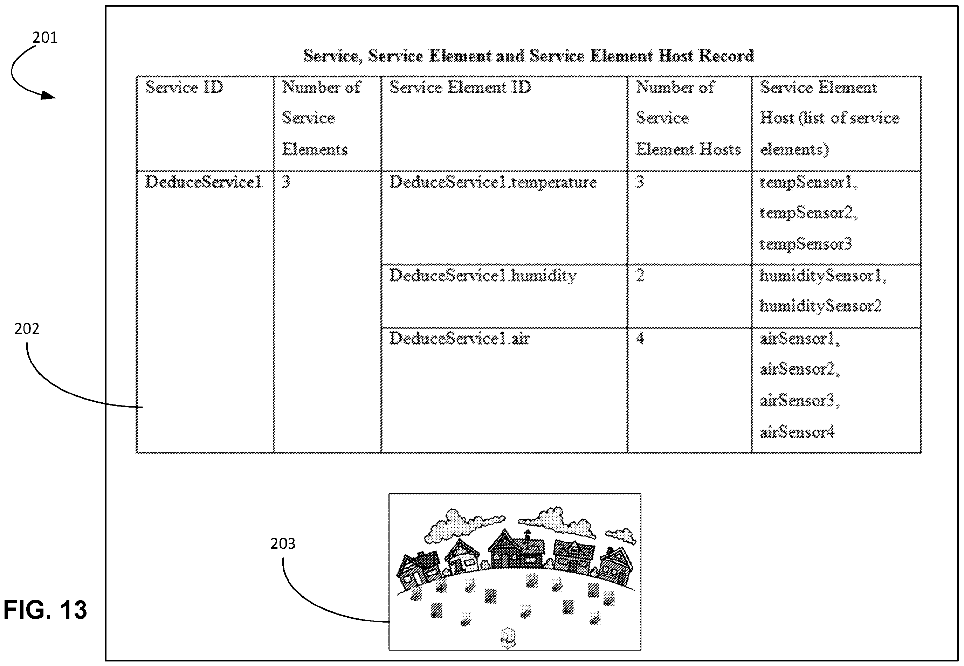

FIG. 13 illustrates an exemplary display (e.g., graphical user interface) that may be generated based on the methods and systems discussed herein. Display interface 201 (e.g., touch screen display) may provide text in block 202 associated with service elements, such as the parameters of Table 1 through Table 6. In another example, progress of any of the steps (e.g., sent messages or success of steps) discussed herein may be displayed in block 202. In addition, graphical output 203 may be displayed on display interface 201. Graphical output 203 may be the topology of the hosts (service element or service), a graphical output of the progress of any method or systems discussed herein, or the like.

Without in any way unduly limiting the scope, interpretation, or application of the claims appearing herein, a technical effect of one or more of the examples disclosed herein is to provide adjustments to how services are generated and published. The service configurations (and related intelligence) may include the use of service elements and associated structures. Another technical effect of one or more of the concepts disclosed herein is that, by comparison to conventional implementations, if a service layers supports service elements and the like as discussed herein, service/service element can be managed as a resource at the service layer, which may be more efficient in organizing and communicating with services.

FIG. 14A is a diagram of an example machine-to machine (M2M), Internet of Things (IoT), or Web of Things (WoT) communication system 10 in which one or more disclosed concepts associated with service elements may be implemented. Service layer 22 of FIG. 14A may operate in a similar manner as service layer 142, but in the context, as discussed in more detail herein. Generally, M2M technologies provide building blocks for the IoT/WoT, and any M2M device, M2M gateway or M2M service platform may be a component of the IoT/WoT as well as an IoT/WoT service layer, etc.

As shown in FIG. 14A, the M2M/ IoT/WoT communication system 10 includes a communication network 12. The communication network 12 may be a fixed network (*e.g*., Ethernet, Fiber, ISDN, PLC, or the like) or a wireless network (*e*.*g*., WLAN, cellular, or the like) or a network of heterogeneous networks. For example, the communication network 12 may comprise of multiple access networks that provides content such as voice, data, video, messaging, broadcast, or the like to multiple users. For example, the communication network 12 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like. Further, the communication network 12 may comprise other networks such as a core network, the Internet, a sensor network, an industrial control network, a personal area network, a fused personal network, a satellite network, a home network, or an enterprise network for example.

As shown in FIG. 14A, the M2M/ IoT/WoT communication system 10 may include the Infrastructure Domain and the Field Domain. The Infrastructure Domain refers to the network side of the end-to-end M2M deployment, and the Field Domain refers to the area networks, usually behind an M2M gateway. The Field Domain includes M2M gateways 14 and terminal devices 18. It will be appreciated that any number of M2M gateway devices 14 and M2M terminal devices 18 may be included in the M2M/ IoT/WoT communication system 10 as desired. Each of the M2M gateway devices 14 and M2M terminal devices 18 are configured to transmit and receive signals via the communication network 12 or direct radio link. The M2M gateway device 14 allows wireless M2M devices (e.g. cellular and non-cellular) as well as fixed network M2M devices (e.g., PLC) to communicate either through operator networks, such as the communication network 12 or direct radio link. For example, the M2M devices 18 may collect data and send the data, via the communication network 12 or direct radio link, to an M2M application 20 or M2M devices 18. The M2M devices 18 may also receive data from the M2M application 20 or an M2M device 18. Further, data and signals may be sent to and received from the M2M application 20 via an M2M service layer 22, as described below. M2M devices 18 and gateways 14 may communicate via various networks including, cellular, WLAN, WPAN (*e.g*., Zigbee, 6LoWPAN, Bluetooth), direct radio link, and wireline for example.

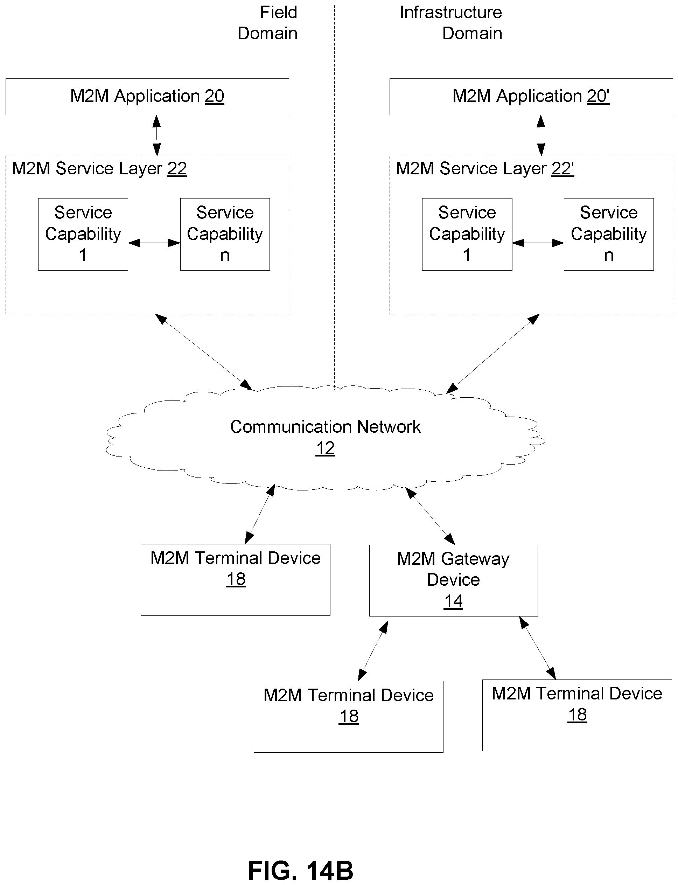

Referring to FIG. 14B, the illustrated M2M service layer 22 (e.g., service layer 142 as described herein) in the field domain provides services for the M2M application 20, M2M gateway devices 14, and M2M terminal devices 18 and the communication network 12. It will be understood that the M2M service layer 22 may communicate with any number of M2M applications, M2M gateway devices 14, M2M terminal devices 18, and communication networks 12 as desired. The M2M service layer 22 may be implemented by one or more servers, computers, or the like. The M2M service layer 22 provides service capabilities that apply to M2M terminal devices 18, M2M gateway devices 14 and M2M applications 20. The functions of the M2M service layer 22 may be implemented in a variety of ways, for example as a web server, in the cellular core network, in the cloud, etc.

Similar to the illustrated M2M service layer 22, there is the M2M service layer 22' in the Infrastructure Domain. M2M service layer 22' provides services for the M2M application 20' and the underlying communication network 12' in the infrastructure domain. M2M service layer 22' also provides services for the M2M gateway devices 14 and M2M terminal devices 18 in the field domain. It will be understood that the M2M service layer 22' may communicate with any number of M2M applications, M2M gateway devices and M2M terminal devices. The M2M service layer 22' may interact with a service layer by a different service provider. The M2M service layer 22' may be implemented by one or more servers, computers, virtual machines (e.g., cloud/compute/storage farms, etc.) or the like.

Referring also to FIG. 14B, the M2M service layer 22 and 22' provide a core set of service delivery capabilities that diverse applications and verticals can leverage. These service capabilities enable M2M applications 20 and 20' to interact with devices and perform functions such as data collection, data analysis, device management, security, billing, service/device discovery etc. Essentially, these service capabilities free the applications of the burden of implementing these functionalities, thus simplifying application development and reducing cost and time to market. The service layer 22 and 22' also enables M2M applications 20 and 20' to communicate through various networks 12 and 12' in connection with the services that the service layer 22 and 22' provide.

In some examples, M2M applications 20 and 20' may include desired applications that communicate and operate using service elements, as discussed herein. The M2M applications 20 and 20' may include applications in various industries such as, without limitation, transportation, health and wellness, connected home, energy management, asset tracking, and security and surveillance. As mentioned above, the M2M service layer, running across the devices, gateways, and other servers of the system, supports functions such as, for example, data collection, device management, security, billing, location tracking/geofencing, device/service discovery, and legacy systems integration, and provides these functions as services to the M2M applications 20 and 20'.

The service elements and associated messages and configuration for a service of the present application may be implemented as part of a service layer. The service layer (e.g., service layer 142) is a software middleware layer that supports value-added service capabilities through a set of application programming interfaces (APIs) and underlying networking interfaces. An M2M entity (e.g., an M2M functional entity such as a device, gateway, or service/platform that may be implemented by a combination of hardware and software) may provide an application or service. Both ETSI M2M and oneM2M use a service layer that may contain the service elements and associated messages and configuration for a service of the present application. ETSI M2M's service layer is referred to as the Service Capability Layer (SCL). The SCL may be implemented within an M2M device (where it is referred to as a device SCL (DSCL)), a gateway (where it is referred to as a gateway SCL (GSCL)) or a network node (where it is referred to as a network SCL (NSCL)). The oneM2M service layer supports a set of Common Service Functions (CSFs) (i.e. service capabilities). An instantiation of a set of one or more particular types of CSFs is referred to as a Common Services Entity (CSE), which can be hosted on different types of network nodes (e.g. infrastructure node, middle node, application-specific node). Further, the service elements and associated messages and configuration for a service of the present application can be implemented as part of an M2M network that uses a Service Oriented Architecture (SOA) or a resource-oriented architecture (ROA) to access services such as the service elements and associated messages and configuration for a service of the present application.

As discussed herein, the service layer may be considered a functional layer within a network service architecture. Service layers are typically situated above the application protocol layer such as HTTP, CoAP or MQTT and provide value added services to client applications. The service layer also provides an interface to core networks at a lower resource layer, such as for example, a control layer and transport/access layer. The service layer supports multiple categories of (service) capabilities or functionalities including a service definition, service runtime enablement, policy management, access control, and service clustering. Recently, several industry standards bodies, e.g., oneM2M, have been developing M2M service layers to address the challenges associated with the integration of M2M types of devices and applications into deployments such as the Internet/Web, cellular, enterprise, and home networks. A M2M service layer can provide applications or various devices with access to a collection of or a set of the above mentioned capabilities or functionalities, supported by the service layer, which can be referred to as a CSE or service capability layer (SCL). A few examples include but are not limited to security, charging, data management, device management, discovery, provisioning, and connectivity management which can be commonly used by various applications. These capabilities or functionalities are made available to such various applications via APIs which make use of message formats, resource structures and resource representations defined by the M2M service layer. The CSE or SCL is a functional entity that may be implemented by hardware or software and that provides (service) capabilities or functionalities exposed to various applications or devices (e.g., functional interfaces between such functional entities) in order for them to use such capabilities or functionalities.

FIG. 14C is a system diagram of an example M2M device 30, such as an M2M terminal device 18 or an M2M gateway device 14 (which may include one or more components of FIG. 10 or FIG. 5) for example. As shown in FIG. 14C, the M2M device 30 may include a processor 32, a transceiver 34, a transmit/receive element 36, a speaker/microphone 38, a keypad 40, a display/touchpad 42, non-removable memory 44, removable memory 46, a power source 48, a global positioning system (GPS) chipset 50, and other peripherals 52. It will be appreciated that the M2M device 30 may include any sub-combination of the foregoing elements while remaining consistent with the disclosed subject matter. M2M device 30 (e.g., service host 133, service host 141, temperature sensor 131, CO2 sensor 132, humidity sensor 134, and others) may be an exemplary implementation that performs the disclosed systems and methods for service elements and associated messaging and configuration of a service.

The processor 32 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 32 may perform signal coding, data processing, power control, input/output processing, or any other functionality that enables the M2M device 30 to operate in a wireless environment. The processor 32 may be coupled to the transceiver 34, which may be coupled to the transmit/receive element 36. While FIG. 14C depicts the processor 32 and the transceiver 34 as separate components, it will be appreciated that the processor 32 and the transceiver 34 may be integrated together in an electronic package or chip. The processor 32 may perform application-layer programs (*e.g*., browsers) or radio access-layer (RAN) programs or communications. The processor 32 may perform security operations such as authentication, security key agreement, or cryptographic operations, such as at the access-layer or application layer for example.

The transmit/receive element 36 may be configured to transmit signals to, or receive signals from, an M2M service platform 22. For example, the transmit/receive element 36 may be an antenna configured to transmit or receive RF signals. The transmit/receive element 36 may support various networks and air interfaces, such as WLAN, WPAN, cellular, and the like. In an example, the transmit/receive element 36 may be an emitter/detector configured to transmit or receive IR, UV, or visible light signals, for example. In yet another example, the transmit/receive element 36 may be configured to transmit and receive both RF and light signals. It will be appreciated that the transmit/receive element 36 may be configured to transmit or receive any combination of wireless or wired signals.

In addition, although the transmit/receive element 36 is depicted in FIG. 14C as a single element, the M2M device 30 may include any number of transmit/receive elements 36. More specifically, the M2M device 30 may employ MIMO technology. Thus, in an example, the M2M device 30 may include two or more transmit/receive elements 36 (*e.g.,* multiple antennas) for transmitting and receiving wireless signals.

The transceiver 34 may be configured to modulate the signals that are to be transmitted by the transmit/receive element 36 and to demodulate the signals that are received by the transmit/receive element 36. As noted above, the M2M device 30 may have multi-mode capabilities. Thus, the transceiver 34 may include multiple transceivers for enabling the M2M device 30 to communicate via multiple RATs, such as UTRA and IEEE 802.11, for example.

The processor 32 may access information from, and store data in, any type of suitable memory, such as the non-removable memory 44 or the removable memory 46. The non-removable memory 44 may include random-access memory (RAM), read-only memory (ROM), a hard disk, or any other type of memory storage device. The removable memory 46 may include a subscriber identity module (SIM) card, a memory stick, a secure digital (SD) memory card, and the like. In other examples, the processor 32 may access information from, and store data in, memory that is not physically located on the M2M device 30, such as on a server or a home computer. The processor 32 may be configured to control lighting patterns, images, or colors on the display or indicators 42 in response to whether the service elements and associated configuration in some of the examples described herein are successful or unsuccessful (e.g., S-SEaH report messages, S-SEaH updated messages, etc.), or otherwise indicate a status of service, service element, and associated components. The control lighting patterns, images, or colors on the display or indicators 42 may be reflective of the status of any of the method flows, underlying method flow results graphically shown, or components in the FIG.'s illustrated or discussed herein (e.g., FIG. 1, FIG. 2, FIG. 4, FIG. 5 - FIG. 7, FIG. 10 - FIG. 11, etc.). Disclosed herein are messages and procedures service elements and associated configuration and publication of a service. The messages and procedures can be extended to provide interface/API for users to request resource-related resources via an input source (e.g., speaker/microphone 38, keypad 40, or display/touchpad 42) and request, configure, or query service elements and services, among other things that may be displayed on display 42.

The processor 32 may receive power from the power source 48, and may be configured to distribute or control the power to the other components in the M2M device 30. The power source 48 may be any suitable device for powering the M2M device 30. For example, the power source 48 may include one or more dry cell batteries (*e.g*., nickel-cadmium (NiCd), nickel-zinc (NiZn), nickel metal hydride (NiMH), lithium-ion (Li-ion), etc.), solar cells, fuel cells, and the like.

The processor 32 may also be coupled to the GPS chipset 50, which is configured to provide location information (*e.g*., longitude and latitude) regarding the current location of the M2M device 30. It will be appreciated that the M2M device 30 may acquire location information by way of any suitable location-determination method while remaining consistent with information disclosed herein.

The processor 32 may further be coupled to other peripherals 52, which may include one or more software or hardware modules that provide additional features, functionality or wired or wireless connectivity. For example, the peripherals 52 may include various sensors such as an accelerometer, biometrics (e.g., figure print) sensors, an e-compass, a satellite transceiver, a sensor, a digital camera (for photographs or video), a universal serial bus (USB) port or other interconnect interfaces, a vibration device, a television transceiver, a hands free headset, a Bluetooth® module, a frequency modulated (FM) radio unit, a digital music player, a media player, a video game player module, an Internet browser, and the like.

The transmit/receive elements 36 may be embodied in other apparatuses or devices, such as a sensor, consumer electronics, a wearable device such as a smart watch or smart clothing, a medical or eHealth device, a robot, industrial equipment, a drone, a vehicle such as a car, truck, train, or airplane. The transmit/receive elements 36 may connect to other components, modules, or systems of such apparatuses or devices via one or more interconnect interfaces, such as an interconnect interface that may comprise one of the peripherals 52.

FIG. 14D is a block diagram of an exemplary computing system 90 on which, for example, the M2M service platform 22 of FIG. 14A and FIG. 14B may be implemented. Computing system 90 (e.g., M2M terminal device 18 or M2M gateway device 14) may comprise a computer or server and may be controlled primarily by computer readable instructions, which may be in the form of software, wherever, or by whatever means such software is stored or accessed. Such computer readable instructions may be executed within central processing unit (CPU) 91 to cause computing system 90 to do work. In many known workstations, servers, and personal computers, central processing unit 91 is implemented by a single-chip CPU called a microprocessor. In other machines, the central processing unit 91 may comprise multiple processors. Coprocessor 81 is an optional processor, distinct from main CPU 91, that performs additional functions or assists CPU 91. CPU 91 or coprocessor 81 may receive, generate, and process data related to the disclosed systems and methods associated with service elements.

In operation, CPU 91 fetches, decodes, and executes instructions, and transfers information to and from other resources via the computer's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memory devices coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 can be read or changed by CPU 91 or other hardware devices. Access to RAM 82 or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode can access only memory mapped by its own process virtual address space; it cannot access memory within another process's virtual address space unless memory sharing between the processes has been set up.

In addition, computing system 90 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain network adaptor 97 that may be used to connect computing system 90 to an external communications network, such as network 12 of FIG. 14A and FIG. 14B.

It is understood that any or all of the systems, methods and processes described herein may be embodied in the form of computer executable instructions (*i*.*e*., program code) stored on a computer-readable storage medium which instructions, when executed by a machine, such as a computer, server, M2M terminal device, M2M gateway device, or the like, perform or implement the systems, methods and processes described herein. Specifically, any of the steps, operations or functions described above may be implemented in the form of such computer executable instructions. Computer readable storage media include both volatile and nonvolatile, removable and non-removable media implemented in any method or technology for storage of information, but such computer readable storage media do not includes signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other physical medium which can be used to store the desired information and which can be accessed by a computer.

In describing preferred methods, systems, or apparatuses of the subject matter of the present disclosure - service elements - as illustrated in the Figures, specific terminology is employed for the sake of clarity. The claimed subject matter, however, is not intended to be limited to the specific terminology so selected, and it is to be understood that each specific element includes all technical equivalents that operate in a similar manner to accomplish a similar purpose.

The various techniques described herein may be implemented in connection with hardware, firmware, software or, where appropriate, combinations thereof. Such hardware, firmware, and software may reside in apparatuses located at various nodes of a communication network. The apparatuses may operate singly or in combination with each other to effectuate the methods described herein. As used herein, the terms "apparatus," "network apparatus," "node," "device," "network node," or the like may be used interchangeably.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. An apparatus (142) for managing service elements, the apparatus comprising:
a processor; and
a memory coupled with the processor, the memory comprising executable instructions that when executed by the processor cause the processor to effectuate operations comprising:
receiving (144) a message comprising identifiers for a plurality of service elements, wherein the plurality of service elements are individual components that are used to provide a first service, and at least one indicator of a plurality of service element hosts for each service element of the plurality of service elements;
generating (145) a record based on the identifiers for the plurality of service elements and the indicators of the plurality of service element hosts , the record comprising a list of service element hosts that correspond to each of the service elements; and
publishing (146) the record comprising the list of service element hosts for the first service.

2. The apparatus of claim 1, wherein the message comprises an identifier of the first service.

3. The apparatus of claim 1, wherein the message is indicative of being from a service host (141).

4. The apparatus of claim 1, wherein the message comprises a number of service elements a service is composed of.

5. The apparatus of claim 1, wherein the first service element is humidity data.

6. The apparatus of claim 1, wherein the first service element is temperature data.

7. A method for managing service elements, the method comprising:
receiving (144) a message comprising identifiers for a plurality of service elements, wherein the plurality of service elements are individual components that are used to provide a first service, and at least one indicator of a plurality of service element hosts for each service element of the plurality of service elements;
generating (145) a record based on the identifiers for the plurality of service elements and the indicators of the plurality of service element hosts, the record comprising a list of service element hosts that correspond to each of the plurality of service elements; and
publishing (146) the record comprising the list of service element hosts for the first service.

8. The method of claim 7, wherein the message comprises an identifier of the first service.

9. The method of claim 7, wherein the message is indicative of being from a service host (141).

10. The method of claim 7, wherein the message comprises a number of service elements a service is composed of.

11. The method of claim 7, wherein the first service element is humidity data.

12. The method of claim 7, wherein the first service element is temperature data.

13. A computer-readable storage medium having a computer program stored thereon, the computer program being loadable into a data-processing unit and adapted to cause the data-processing unit to execute method steps according to any of claims 7 to 12 when the computer program is run by the data-processing unit.

## Patentansprüche

1. Vorrichtung (142) zum Verwalten von Dienstelementen, wobei die Vorrichtung Folgendes umfasst:
einen Prozessor; und
einen Speicher, der mit dem Prozessor gekoppelt ist, wobei der Speicher ausführbare Anweisungen umfasst, die dann, wenn sie durch den Prozessor ausgeführt werden, bewirken, dass der Prozessor Vorgänge bewirkt, die Folgendes umfassen:
Empfangen (144) einer Nachricht, die Identifikationselemente für mehrere Dienstelemente, wobei die mehreren Dienstelemente einzelne Komponenten sind, die verwendet werden, um einen ersten Dienst bereitzustellen, und wenigstens einen Indikator von mehreren Dienstelement-Hosts für jedes Dienstelement der mehreren Dienstelemente umfasst;
Erzeugen (145) einer Aufzeichnung auf der Basis der Identifikationselemente für die mehreren Dienstelemente und der Indikatoren der mehreren Dienstelement-Hosts, wobei die Aufzeichnung eine Liste von Dienstelement-Hosts umfasst, die sich auf jedes der Dienstelemente beziehen; und
Veröffentlichen (146) der Aufzeichnung, die die Liste von Dienstelement-Hosts für den ersten Dienst umfasst.

2. Vorrichtung nach Anspruch 1, wobei die Nachricht ein Identifikationselement des ersten Dienstes umfasst.

3. Vorrichtung nach Anspruch 1, wobei die Nachricht anzeigt, ob sie von einem Dienst-Host (141) stammt.

4. Vorrichtung nach Anspruch 1, wobei die Nachricht eine Anzahl von Dienstelementen umfasst, aus denen ein Dienst zusammengesetzt ist.

5. Vorrichtung nach Anspruch 1, wobei das erste Dienstelement Feuchtigkeitsdaten sind.

6. Vorrichtung nach Anspruch 1, wobei das erste Dienstelement Temperaturdaten sind.

7. Verfahren zum Verwalten von Dienstelementen, wobei das Verfahren die folgenden Schritte umfasst:
Empfangen (144) einer Nachricht, die Identifikationselemente für mehrere Dienstelemente, wobei die mehreren Dienstelemente einzelne Komponenten sind, die verwendet werden, um einen ersten Dienst bereitzustellen, und wenigstens einen Indikator von mehreren Dienstelement-Hosts für jedes Dienstelement der mehreren Dienstelemente umfasst;
Erzeugen (145) einer Aufzeichnung auf der Basis der Identifikationselemente der mehreren Dienstelemente und der Indikatoren der mehreren Dienstelement-Hosts, wobei die Aufzeichnung eine Liste von Dienstelement-Hosts umfasst, die sich auf jedes der mehreren Dienstelemente beziehen; und
Veröffentlichen (146) der Aufzeichnung, die die Liste von Dienstelement-Hosts für den ersten Dienst umfasst.

8. Verfahren nach Anspruch 7, wobei die Nachricht ein Identifikationselement des ersten Dienstes umfasst.

9. Verfahren nach Anspruch 7, wobei die Nachricht anzeigt, ob sie von einem Dienst-Host (141) stammt.

10. Verfahren nach Anspruch 7, wobei die Nachricht eine Anzahl von Dienstelementen umfasst, aus denen ein Dienst zusammengesetzt ist.

11. Verfahren nach Anspruch 7, wobei das erste Dienstelement Feuchtigkeitsdaten sind.

12. Verfahren nach Anspruch 7, wobei das erste Dienstelement Temperaturdaten sind.

13. Computerlesbares Speichermedium, auf dem ein Computerprogramm gespeichert ist, wobei das Computerprogramm in eine Datenverarbeitungseinheit geladen werden kann und ausgelegt ist, zu bewirken, dass die Datenverarbeitungseinheit Verfahrensschritte nach einem der Ansprüche 7 bis 12 ausführt, wenn das Computerprogramm durch die Datenverarbeitungseinheit ausgeführt wird.

## Revendications

1. Appareil (142) pour gérer des éléments de service, l'appareil comprenant :
un processeur ; et
une mémoire couplée au processeur, la mémoire comprenant des instructions exécutables qui, lorsqu'elles sont exécutées par le processeur, amènent le processeur à exécuter des opérations comprenant les étapes suivantes :
recevoir (144) un message comprenant des identificateurs pour une pluralité d'éléments de service, où la pluralité d'éléments de service sont des composants individuels qui sont utilisés pour fournir un premier service, et au moins un indicateur d'une pluralité d'hôtes d'éléments de service pour chaque élément de service de la pluralité d'éléments de service ;
générer (145) un enregistrement basé sur les identificateurs pour la pluralité d'éléments de service et sur les indicateurs de la pluralité d'hôtes d'éléments de service, l'enregistrement comprenant une liste d'hôtes d'éléments de service qui correspondent à chacun des éléments de service ; et
publier (146) l'enregistrement comprenant la liste des hôtes d'éléments de service pour le premier service.

2. Appareil selon la revendication 1, dans lequel le message comprend un identificateur du premier service.

3. Appareil selon la revendication 1, dans lequel le message indique qu'il provient d'un hôte de service (141) .

4. Appareil selon la revendication 1, dans lequel le message comprend un certain nombre d'éléments de service qui composent un service.

5. Appareil selon la revendication 1, dans lequel le premier élément de service est une donnée d'humidité.

6. Appareil selon la revendication 1, dans lequel le premier élément de service est une donnée de température.

7. Procédé de gestion d'éléments de service, le procédé comprenant les étapes suivantes :
recevoir (144) un message comprenant des identificateurs pour une pluralité d'éléments de service, où la pluralité d'éléments de service sont des composants individuels qui sont utilisés pour fournir un premier service, et au moins un indicateur d'une pluralité d'hôtes d'éléments de service pour chaque élément de service de la pluralité d'éléments de service ;
générer (145) un enregistrement basé sur les identificateurs pour la pluralité d'éléments de service et sur les indicateurs de la pluralité d'hôtes d'éléments de service, l'enregistrement comprenant une liste d'hôtes d'éléments de service qui correspondent à chacun de la pluralité d'éléments de service ; et
publier (146) l'enregistrement comprenant la liste des hôtes d'éléments de service pour le premier service.

8. Procédé selon la revendication 7, dans lequel le message comprend un identificateur du premier service.

9. Procédé selon la revendication 7, dans lequel le message indique qu'il provient d'un hôte de service (141) .

10. Procédé selon la revendication 7, dans lequel le message comprend un certain nombre d'éléments de service qui composent un service.

11. Procédé selon la revendication 7, dans lequel le premier élément de service est une donnée d'humidité.

12. Procédé selon la revendication 7, dans lequel le premier élément de service est une donnée de température.

13. Support de stockage lisible par ordinateur sur lequel est stocké un programme d'ordinateur, le programme d'ordinateur pouvant être chargé dans une unité de traitement de données et adapté pour amener l'unité de traitement de données à exécuter des étapes de procédé selon l'une quelconque des revendications 7 à 12 lorsque le programme d'ordinateur est exécuté par l'unité de traitement de données.
